# EUROPÄISCHE PATENTANMELDUNG

(11) **EP 2 774 572 A1**
(43) Veröffentlichungstag der Anmeldung: **10.09.2014**
(21) Anmeldenummer: 13158141.5
(22) Anmeldetag: 07.03.2013
(51) Int. Cl.: A61C 1/08, H01R 13/00

(54) **Medizinische, insbesondere dentale, Kupplungsvorrichtung**

(71) Anmelder: W & H Dentalwerk Bürmoos GmbH, 5111 Bürmoos (AT)
(72) Erfinder: Hofbauer, Manfred, 5111 Bürmoos (AT); Schmiedlechner, Karl, 5121 Ostermiething (AT); Schuh, Walter, 5111 Bürmoos (AT)
(74) Vertreter: Benda, Ralf

(57) **Zusammenfassung**

Kupplungsvorrichtung (1, 1') zur Verbindung eines medizinischen, insbesondere dentalen, Instruments mit einer Versorgungs-, Steuer- und / oder Regeleinheit und Herstellungsverfahren für eine derartige Kupplungsvorrichtung (1, 1'), wobei die Kupplungsvorrichtung (1, 1') einen Körper (2) und eine an dem Körper (2) befestigbare Außenhülse (3) aufweist, wobei der Körper (2) umfasst: Ein instrumentenseitiges Ende (4) mit einem Kupplungszapfen (6) zur lösbaren Verbindung mit dem Instrument und ein versorgungsseitiges Ende (5) mit einer Verbindungsvorrichtung (7) zur lösbaren Verbindung mit der Versorgungs-, Steuer- und / oder Regeleinheit, zumindest eine Leitung (8, 8' - 12, 12') zur Übertragung eines Mediums, von Energie und / oder Daten, die sich durch die Kupplungsvorrichtung (1, 1') erstreckt, wobei der Körper (2) der Kupplungsvorrichtung (1, 1') zwei lösbar miteinander verbindbare Abschnitte (2A, 2B) aufweist und wobei an dem ersten Abschnitt (2A) das instrumentenseitige Ende (4) und an dem zweiten Abschnitt (2B) das versorgungsseitige Ende (5) vorgesehen ist.

## Beschreibung

Die vorliegende Erfindung betrifft eine Kupplungsvorrichtung zur Verbindung eines medizinischen, insbesondere dentalen, Instruments mit einer Versorgungs-, Steuer- und / oder Regeleinheit.

Eine Kupplungsvorrichtung zur Verbindung eines medizinischen, insbesondere dentalen, Instruments mit einer Versorgungs-, Steuer- und / oder Regeleinheit ist aus der Patentschrift US 4,626,210 bekannt. Die Kupplungsvorrichtung wird von mehreren Leitung zur Übertragung eines Mediums, von Energie und / oder Daten durchsetzt. Des Weiteren weist die Kupplungsvorrichtung an ihrer Außenseite unterschiedliche geometrische Strukturen wir Nuten, Rücksprünge, Vorsprünge und unterschiedliche Außendurchmesser auf. Aufgrund dieses komplizierten Aufbaus ist es notwendig, derartige Kupplungsvorrichtungen an mehreren unterschiedlichen Fertigungsmaschinen und in mehreren Arbeitsschritten zu fertigen, wobei die unfertigen Kupplungsvorrichtung oftmals noch zusätzlich in unterschiedlichen Positionen an einer Fertigungsmaschine aufgespannt werden müssen. Die Herstellung ist demgemäß technisch kompliziert, zeitaufwendig und daher kostspielig.

Der vorliegenden Erfindung liegt daher die Aufgabe zugrunde eine Kupplungsvorrichtung zur Verbindung eines medizinischen, insbesondere dentalen, Instruments mit einer Versorgungs-, Steuer- und / oder Regeleinheit, deren Herstellung weniger aufwendig ist, und ein entsprechend vereinfachtes Herstellungsverfahren zu schaffen.

Diese Aufgabe wird gemäß der vorliegenden Erfindung durch eine Kupplungsvorrichtung zur Verbindung eines medizinischen, insbesondere dentalen, Instruments mit einer Versorgungs-, Steuer- und / oder Regeleinheit gemäß Anspruch 1 und durch ein Verfahren zur Herstellung einer Kupplungsvorrichtung zur Verbindung eines medizinischen, insbesondere dentalen, Instruments mit einer Versorgungs-, Steuer- und / oder Regeleinheit gemäß Anspruch 15 gelöst.

Die Kupplungsvorrichtung weist einen Körper und eine an dem Körper befestigbare Außenhülse auf, wobei der Körper umfasst: Ein instrumentenseitiges Ende und ein versorgungsseitiges Ende, wobei am instrumentenseitigen Ende ein Kupplungszapfen zur lösbaren Verbindung mit dem medizinischen, insbesondere dentalen, Instrument und am versorgungsseitigen Ende eine Verbindungsvorrichtung zur lösbaren Verbindung mit der Versorgungs-, Steuer- und / oder Regeleinheit vorgesehen ist, und zumindest eine Leitung zur Übertragung eines Mediums, von Energie und / oder Daten, die sich durch die Kupplungsvorrichtung erstreckt oder die das instrumentenseitige Ende und das versorgungsseitige Ende verbindet, so dass ein Medium, Energie und / oder Daten durch die Kupplungsvorrichtung übertragbar ist / sind, wobei der Körper der Kupplungsvorrichtung zwei lösbar miteinander verbindbare Abschnitte aufweist, und wobei an dem ersten Abschnitt das instrumentenseitige Ende und an dem zweiten Abschnitt das versorgungsseitige Ende vorgesehen ist.

Die Teilung der Kupplungsvorrichtung in zwei lösbar miteinander verbindbare Abschnitte ermöglicht es, jeden der beiden Abschnitte in je einem Fertigungsschritt und insbesondere an jeweils einer Fertigungsmaschine herzustellen. Insbesondere können dadurch die Leitungen zur Übertragung eines Mediums, von Energie und / oder Daten einfacher aus dem Rohling heraus gearbeitet werden. Damit entfällt im Vergleich zum Stand der Technik die Notwendigkeit, die unfertige Kupplungsvorrichtung an mehreren Fertigungsmaschinen und / oder in unterschiedlichen Positionen aufzuspannen, wodurch die Fertigung der Kupplungsvorrichtung vereinfacht, die Fertigungsdauer und die Rüstzeiten der Fertigungsmaschinen verkürzt und somit die Herstellungskosten der Kupplungsvorrichtung verringert werden. Ein weiterer Vorteil besteht darin, dass gegebenenfalls die beiden lösbar miteinander verbindbaren Abschnitte aus unterschiedlichen Materialien herstellbar sind. Ein anderer Vorteil der Kupplungsvorrichtung mit zwei lösbar miteinander verbindbaren Abschnitten besteht darin, dass in der Kupplungsvorrichtung vorgesehene Bauteile leichter zugänglich und damit einfacher einbaubar und / oder austauschbar sind (insbesondere auch an oder über die Trenn- oder Schnittstelle der beiden Abschnitte), zum Beispiel elektrische oder elektronische Bauteile, insbesondere eine gedruckte, gestanzte oder geätzte Leiterbahn und / oder ein flexibler Leiterbahnträgers oder darauf angeordnete elektrische oder elektronische Bauteile.

Vorzugsweise weist die Kupplungsvorrichtung eine gerade Längsachse auf, entlang der sich die Kupplungsvorrichtung, insbesondere der Körper der Kupplungsvorrichtung, erstreckt. Bevorzugt ist die Schnittfläche oder Schnittebene zwischen den beiden Abschnitten der Kupplungsvorrichtung gewinkelt, insbesondere im Wesentlichen rechtwinkelig, zur Längsachse der Kupplungsvorrichtung angeordnet. Der Winkel zwischen der Schnittebene und der Längsachse der Kupplungsvorrichtung ist insbesondere zumindest größer 0°. Bevorzugt schneidet die Schnittfläche oder Schnittebene den Körper der Kupplungsvorrichtung oder einen das instrumentenseitige Ende und das versorgungsseitige Ende verbindenden Körpermittelteil, so dass beide Abschnitte der Kupplungsvorrichtung jeweils einen Teil des Körpers oder des Körpermittelteils aufweisen, oder die Schnittfläche oder Schnittebene schneidet die Kupplungsvorrichtung an einem Ende des Körpermittelteils der Kupplungsvorrichtung, so dass ein Abschnitt der Kupplungsvorrichtung zumindest den Großteil des Körpermittelteils aufweist. Besonders bevorzugt ist der erste Abschnitt der Kupplungsvorrichtung im Wesentlichen durch den Kupplungszapfen gebildet. Der zweite Abschnitt der Kupplungsvorrichtung umfasst somit im Wesentlichen den übrigen Körper oder Körpermittelteil, insbesondere mit dem Verbindungselement für die Außenhülse, und die Verbindungsvorrichtung zur lösbaren Verbindung mit der Versorgungs-, Steuer- und / oder Regeleinheit.

Vorzugsweise umfasst der Körper des Weiteren, wie im Vorstehenden schon erwähnt, einen das instrumentenseitige Ende und das versorgungsseitige Ende verbindenden Körpermittelteil. Vorzugsweise ist der Körpermittelteil im Wesentlichen zylindrisch ausgebildet. Vorzugsweise ist im Körper oder Körpermittelteil zumindest eine Leitung zur Übertragung eines Mediums (zum Beispiel einer Flüssigkeit, eines Gases oder von elektromagnetischer Strahlung), von (elektrischer) Energie und / oder Daten vorgesehen. Vorzugsweise ist zumindest eines der Enden der Kupplungsvorrichtung, zum Beispiel das instrumentenseitige Ende, insbesondere der Kupplungszapfen am instrumentenseitigen Ende, von dem Körpermittelteil der Kupplungsvorrichtung durch eine Schulter oder Stufe abgesetzt. Alternativ weist zumindest eines der Enden der Kupplungsvorrichtung, zum Beispiel das instrumentenseitige Ende, insbesondere der Kupplungszapfen am instrumentenseitigen Ende, einen geringeren Außendurchmesser auf als der Körpermittelteil der Kupplungsvorrichtung. Vorzugsweise ist am Körper oder Körpermittelteil, insbesondere an dessen Außenseite, zumindest ein Element zum Befestigen der Außenhülse, zum Beispiel ein Gewinde, und / oder eine Anschlag zum Anlagern der Außenhülse vorgesehen.

Vorzugsweise ist der Kupplungszapfen am instrumentenseitigen Ende der Kupplungsvorrichtung im Wesentlichen zylindrisch oder hohlzylindrisch ausgebildet. Vorzugsweise ist im Kupplungszapfen zumindest eine Leitung zur Übertragung eines Mediums (zum Beispiel einer Flüssigkeit, eines Gases oder von elektromagnetischer Strahlung), von (elektrischer) Energie und / oder Daten vorgesehen. Vorzugsweise ist am Kupplungszapfen, insbesondere an seiner Oberfläche, zumindest eine Öffnung oder Ausnehmung vorgesehen, die mit einer Leitung zur Übertragung eines Mediums (zum Beispiel einer Flüssigkeit, eines Gases oder von elektromagnetischer Strahlung), von Energie und / oder Daten des Kupplungszapfens und / oder des Instruments verbunden oder verbindbar ist. Vorzugsweise ist am Kupplungszapfen zumindest ein elektrischer Kontakt zur Übertragung von elektrischer Energie vorgesehen, zum Beispiel ein metallischer Stift, ein flächiger Metallkontakt oder ein metallisches Band, insbesondere ein den Kupplungszapfen an seiner Außenseite umgebendes, ringförmiges Metallband, das zum Beispiel Teil eines Schleifkontakts ist. Vorzugsweise ist am Kupplungszapfen zumindest eine Dichtelement vorgesehen, insbesondere ein O-Ring, zum Beispiel zum Abdichten einer Öffnung oder Ausnehmung einer Fluid-, insbesondere einer Flüssigkeitsleitung. Vorzugsweise ist am Kupplungszapfen zumindest eine Aufnahme für ein Dichtelement, insbesondere für einen O-Ring, vorgesehen, zum Beispiel ein Rücksprung oder eine Nut oder eine Ringnut an der Außenseite des Kupplungszapfens. Besonders bevorzugt ist / sind das zumindest eine Dichtelement und / oder die Aufnahme für ein Dichtelement zwischen dem zumindest einen elektrischen Kontakt und der Öffnung oder Ausnehmung, die mit einer Flüssigkeitsleitung verbunden oder verbindbar ist, vorgesehen.

Vorzugsweise ist der Kupplungszapfen am instrumentenseitigen Ende der Kupplungsvorrichtung ausgebildet und / oder bemessen, in eine Aufnahme, zum Beispiel in ein Kupplungsrohr eines medizinischen, insbesondere dentalen, Instruments, einzugreifen oder darin aufnehmbar zu sein. Vorzugsweise bildet der Kupplungszapfen einen Teil einer Steckkupplung und / oder Rotationskupplung, deren anderer Teil (zum Beispiel eine Aufnahme oder ein Kupplungsrohr) an oder in dem Instrument vorgesehen ist. Vorzugsweise sind der Kupplungszapfen oder die Rotationskupplung derart ausgebildet, dass das Instrument und die Kupplungsvorrichtung relativ zueinander drehbar sind. Vorzugsweise sind die Aufnahme oder das Kupplungsrohr an einem kupplungsseitigen Ende der Instrument vorgesehen. Vorzugsweise sind die Aufnahme oder das Kupplungsrohr des Instruments aus Metall hergestellt. Vorzugsweise umfasst das Instrument ein gerades, gebogenes oder gewinkeltes Handstück, zum Beispiel zum Antrieb eines mit dem Instrument verbindbaren Werkzeugs und / oder zur Abgabe eines Mediums, von Energie oder von Licht. Vorzugsweise umfasst eine medizinische, insbesondere dentale, Behandlungsvorrichtung ein derartiges medizinisches, insbesondere dentales, Instrument und eine Kupplungsvorrichtung zur Verbindung des Instruments mit einer Versorgungs-, Steuer- und / oder Regeleinheit.

Vorzugsweise weist der Kupplungszapfen eine instrumentenseitige, freie Endfläche auf, an welcher mittig eine Öffnung vorgesehen ist, die mit einer Rohrleitung zur Leitung eines Fluids der Kupplungsvorrichtung verbunden und / oder mit einer Rohrleitung zur Leitung eines Fluids des Instruments verbindbar ist. Die mittig angeordnete Öffnung ermöglicht eine besonders einfache Übertragung des Fluids von der Kupplungsvorrichtung auf das Instrument.

Vorzugsweise weist der Kupplungszapfen eine instrumentenseitige, freie, metallische Endfläche auf oder von einer instrumentenseitigen, freien Endfläche des Kupplungszapfens steht (in Richtung des Instruments) eine Rohrleitung mit einer instrumentenseitigen, freien, metallischen Kontaktfläche ab. Die metallische End- oder Kontaktfläche bewirkt in vorteilhafter Weise einen besseren, verschleißärmeren Kontakt mit dem Instrument, zum Beispiel wenn der Kupplungszapfen, das instrumentenseitige Ende oder die zwei lösbar miteinander verbindbaren Abschnitte der Kupplungsvorrichtung aus Kunststoff hergestellt sind und insbesondere wenn der Kupplungszapfen als Teil einer Rotationskupplung ausgebildet ist oder das Instrument und die Kupplungsvorrichtung relativ zueinander drehbar sind. Die metallische End- oder Kontaktfläche ist zum Beispiel durch eine auf dem Kupplungszapfen oder auf der Kupplungsvorrichtung befestigte Metallmanschette oder durch die Stirnfläche eines metallischen Rohrs gebildet, das in die Rohrleitung oder in eine Öffnung am Kupplungszapfen, insbesondere in die im Vorstehenden beschriebene mittige Öffnung an der instrumentenseitigen, freien Endfläche des Kupplungszapfens eingefügt ist. Vorzugsweise weist die Stirnfläche des metallischen Rohrs einen größeren Außendurchmesser als das metallische Rohr auf.

Vorzugsweise ist die Verbindungsvorrichtung oder das versorgungsseitige Ende der Kupplungsvorrichtung im Wesentlichen zylindrisch ausgebildet. Vorzugsweise ist der Außendurchmesser der Verbindungsvorrichtung oder des versorgungsseitigen Endes in etwa gleich dem Außendurchmesser des Körpermittelteils der Kupplungsvorrichtung. Vorzugsweise ist in der Verbindungsvorrichtung zumindest eine Leitung zur Übertragung eines Mediums (zum Beispiel einer Flüssigkeit, eines Gases oder von elektromagnetischer Strahlung), von (elektrischer) Energie und / oder Daten vorgesehen. Vorzugsweise ist an der Verbindungsvorrichtung oder an dem versorgungsseitigen Ende zumindest eine Öffnung oder Ausnehmung vorgesehen, die mit einer Leitung zur Übertragung eines Mediums (zum Beispiel einer Flüssigkeit, eines Gases oder von elektromagnetischer Strahlung), von Energie und / oder Daten verbunden oder verbindbar ist. Vorzugsweise ist an der Verbindungsvorrichtung oder an dem versorgungsseitigen Ende zumindest ein elektrischer Kontakt zur Übertragung von elektrischer Energie vorgesehen, zum Beispiel ein metallischer Stift oder ein flächiger Metallkontakt. Vorzugsweise ist an der Verbindungsvorrichtung oder dem versorgungsseitigen Ende zumindest eine Dichtelement vorgesehen, zum Beispiel zum Abdichten einer Öffnung oder Ausnehmung einer Fluid-, insbesondere einer Flüssigkeitsleitung. Vorzugsweise ist die Verbindungsvorrichtung zur Verbindung mit einem Schlauch der Versorgungs-, Steuer- und / oder Regeleinheit ausgebildet. Vorzugsweise umfasst die Verbindungsvorrichtung am versorgungsseitigen Ende der Kupplungsvorrichtung zum lösbaren Verbinden mit dem Schlauch zumindest einen Teil einer Steckverbindung oder einer Schraubverbindung, zum Beispiel ein Außengewinde.

Vorzugsweise weist die Verbindungsvorrichtung am versorgungsseitigen Ende der Kupplungsvorrichtung eine versorgungsseitige, freie Endfläche auf, von welcher zumindest ein integral mit der Kupplungsvorrichtung ausgebildetes Rohr zur Übertragung eines Mediums (in die Umgebung) absteht und / oder an der zumindest eine Öffnung vorgesehen ist, in welche eine Leitung zur Übertragung eines Mediums, von Energie und / oder Daten einfügbar ist, wobei vorzugsweise zumindest ein Teil der einfügbaren Leitung von der Endfläche (in die Umgebung) absteht. Das integral mit der Kupplungsvorrichtung ausgebildete Rohr erleichtert den Herstellungsprozess der Kupplungsvorrichtung. In die Öffnung kann zum Beispiel eine Leitung oder ein Rohr eingefügt werden, die / das aus einem anderen Material hergestellt ist als die Verbindungsvorrichtung oder das verbindungsseitige Ende der Kupplungsvorrichtung. In die Öffnung kann zum Beispiel eine metallische Leitung oder ein metallisches Rohr eingefügt werden, was insbesondere eine verbesserten Festigkeit oder einen geringeren Verschleiß bewirkt, wenn der die Verbindungsvorrichtung, das verbindungsseitige Ende oder die zwei lösbar miteinander verbindbaren Abschnitte der Kupplungsvorrichtung aus Kunststoff hergestellt sind.

Vorzugsweise erstreckt sich die zumindest eine Leitung zur Übertragung eines Mediums, von Energie und / oder Daten, durch die Kupplungsvorrichtung oder den Körper oder den Körpermittelteil der Kupplungsvorrichtung, so dass ein Medium, Energie und / oder Daten durch die Kupplungsvorrichtung übertragbar ist / sind. Die Leitung verbindet somit insbesondere das instrumentenseitige Ende und das versorgungsseitige Ende der Kupplungsvorrichtung. Vorzugsweise ist die Leitung in jedem der beiden lösbar miteinander verbindbaren Abschnitte der Kupplungsvorrichtung als durchgängige Leitung oder als durchgängiger Leitungsabschnitt ausgebildet. Die einzelnen Leitungen oder Leitungsabschnitte erstrecken sich entweder im Wesentlichen gerade oder parallel zur Längsachse der Kupplungsvorrichtung oder sie weisen, in Bezug auf die Längsachse der Kupplungsvorrichtung, zueinander versetzt angeordnete Unterabschnitte oder radial verlaufende Unterabschnitte auf. Vorzugsweise weist die zumindest eine Leitung zur Übertragung eines Mediums, von Energie und / oder Daten eine Rohrleitung oder Bohrung zur Leitung eines Fluids (Wasser, Druckluft) oder einen elektrischen Leiter, zum Beispiel eine metallische Leiterbahn, oder einen optischen Leiter, zum Beispiel eine Glasfaser oder einen Glasstab, auf. Vorzugsweise ist die Rohrleitung oder Bohrung zur Leitung eines Fluids mit zumindest einer Öffnung oder Ausnehmung an der Oberfläche oder Außenseite des instrumentenseitigen Endes oder des Kupplungszapfens oder des versorgungsseitigen Endes oder der Verbindungsvorrichtung verbunden. Vorzugsweise ist der elektrische Leiter mit zumindest einem elektrischen Kontakt an der Oberfläche oder Außenseite des instrumentenseitigen Endes oder des Kupplungszapfens oder des versorgungsseitigen Endes oder der Verbindungsvorrichtung verbunden. Vorzugsweise ist der elektrische Leiter oder der optische Leiter in einer Bohrung der Kupplungsvorrichtung oder des Körpers oder des Körpermittelteils der Kupplungsvorrichtung aufgenommen.

Vorzugsweise ist die Außenhülse hohlzylindrisch ausgebildet. Vorzugsweise weist die Außenhülse eine Bohrung zur Aufnahme zumindest eines Teils der Kupplungsvorrichtung, insbesondere des Körpermittelteils, auf. Vorzugsweise ist die Außenhülse aus einem anderen Material hergestellt als die Kupplungsvorrichtung oder zumindest einer der beiden lösbar miteinander verbindbaren Abschnitte. Besonders bevorzugt ist die Außenhülse aus Metall hergestellt und zumindest einer der beiden lösbar miteinander verbindbaren Abschnitte ist aus Kunststoff gefertigt. Die aus Metall hergestellte Außenhülse bewirkt den höchst möglichen Schutz vor äußeren Einflüssen für die Kupplungsvorrichtung. Vorzugsweise ist in der Außenhülse, insbesondere an ihrer Innenseite oder an einer in der Außenhülse, bevorzugt gefedert, aufgenommenen Innenhülse, zumindest ein Teil einer Verbindungs- und / oder Verriegelungsvorrichtung zur Verbindung und / oder Verriegelung der Kupplungsvorrichtung mit einem medizinischen, insbesondere dentalen Instrument vorgesehen.

Vorzugsweise ist an der Außenhülse, insbesondere an ihrer Innenseite oder an einer in der Außenhülse, bevorzugt gefedert, aufgenommenen Innenhülse, zumindest ein Element, zum Beispiel ein Gewinde, zum Befestigen an der Kupplungsvorrichtung, insbesondere an deren Körpermittelteil, und / oder eine Anschlag zum Anlagern an dem Körper der Kupplungsvorrichtung, insbesondere an einem Anschlag des Körpers, vorgesehen. Der Anschlag des Körpers ist entweder an dem Körpermittelteil, an einer der beiden lösbar miteinander verbindbaren Abschnitte der Kupplungsvorrichtung oder an dem Kupplungszapfen vorgesehen. Insbesondere das Vorsehen des Anschlags an jenem der beiden lösbar miteinander verbindbaren Abschnitte der Kupplungsvorrichtung, der kein Element zum Befestigen der Außenhülse aufweist, bewirkt in vorteilhafter Weise ein Befestigen oder Klemmen dieses Abschnitts in der Außenhülse, insbesondere zwischen dem Anschlag der Außenhülse und dem Befestigungselement des Körpers der Kupplungsvorrichtung für die Außenhülse. Der Anschlag des Körpers der Kupplungsvorrichtung ist vorzugsweise kreisbogen- oder ringförmig ausgebildet oder umgibt den Körper kreisbogen- oder ringförmig. Der Anschlag des Körpers ist zum Beispiel als integraler Flansch der Kupplungsvorrichtung, insbesondere einer der beiden lösbar miteinander verbindbaren Abschnitte, ausgebildet. Der Anschlag der Außenhülse ist insbesondere als in die Bohrung ragender, zum Beispiel kreisbogen- oder ringförmiger, Anschlag ausgebildet. Der Anschlag des Körpersder Kupplungsvorrichtung und der Anschlag der Außenhülse sind insbesondere derart ausgebildet und angeordnet, dass durch das Verbinden der Außenhülse mit dem Körper der Kupplungsvorrichtung, insbesondere durch das Aufschrauben der Außenhülse auf den Körper, die beiden Anschläge einander berühren oder aneinander lagern.

Vorzugsweise sind der erste und der zweite Abschnitt mittels einer Steckverbindung miteinander verbindbar, welche an einem des ersten oder zweiten Abschnitts ein Steckelement und an dem anderen des ersten oder zweiten Abschnitts eine Aufnahme für das Steckelement aufweist. Die Steckverbindung kann insbesondere auch als reibschlüssige Verbindung oder als Klemmverbindung ausgebildet sein. Vorzugsweise umfasst jeder Abschnitt (an der Steckverbindung) eine Steckverbindungsfläche, die einander zugewandt sind, wenn die beiden Abschnitte miteinander verbunden sind. Eine Steckverbindung garantiert insbesondere bei Vorhandensein mehrerer Leitungen zur Übertragung eines Mediums, von Energie und / oder Daten ein sicherer, einfache, dichte und korrekte Verbindung der jeweils zusammengehörenden Leitungsabschnitte einer Leitung. In anderen Worten ist durch das Vorsehen spezifischer geometrischer Formen an der Steckverbindung und / oder eines Steckelements und der dazugehörigen Aufnahme und / oder durch die spezifische Anordnung eines Steckelements und der dazugehörigen Aufnahme zuverlässig gewährleistet, dass die jeweils zusammengehörenden Leitungsabschnitte der beiden lösbar miteinander verbindbaren Abschnitte auch tatsächlich miteinander verbunden werden.

Vorzugsweise ist das Steckelement durch einen Ringflansch gebildet, der in die Aufnahme für das Steckelement einsteckbar ist. Der Ringflansch ist zum Beispiel an einem steckverbindungs-seitigen Ende eines der beiden lösbar miteinander verbindbaren Abschnitte der Kupplungsvorrichtung vorgesehen. Der Ringflansch ist insbesondere am Außenumfang eines der beiden lösbar miteinander verbindbaren Abschnitte der Kupplungsvorrichtung oder des steckverbindungs-seitigen Endes vorgesehen oder umgibt die Steckverbindungsfläche. Die Aufnahme ist zum Beispiel als ringförmiger Rücksprung ausgebildet, dessen Durchmesser derart bemessen ist, dass der Ringflansch kontaktierend oder formschlüssig darin einfügbar ist. Vorzugsweise umfasst die Aufnahme die Steckverbindungsfläche und einen von der Steckverbindungsfläche abstehenden, vorzugsweise ringförmigen, Rand oder Flansch. Die Aufnahme ist zum Beispiel an einem steckverbindungs-seitigen Ende des anderen der beiden lösbar miteinander verbindbaren Abschnitte der Kupplungsvorrichtung vorgesehen. Alternativ oder zusätzlich ist an einer Steckverbindungsfläche eines Abschnitts, jedoch nicht am Außenumfang der Steckverbindungsfläche, ein Steckelement, zum Beispiel ein Fortsatz oder ein Stift, und an der Steckverbindungsfläche des anderen Abschnitts, jedoch nicht am Außenumfang der Steckverbindungsfläche, eine Aufnahme für das Steckelement, zum Beispiel ein Rücksprung oder eine Aussparung.

Vorzugsweise weist zumindest eine Leitung zur Übertragung eines Mediums, von Energie und / oder Daten einen ersten Leitungsabschnitt, der in dem ersten Abschnitt der Kupplungsvorrichtung vorgesehen ist, und einen zweiten Leitungsabschnitt, der in dem zweiten Abschnitt der Kupplungsvorrichtung vorgesehen ist, auf, wobei der erste Leitungsabschnitt und der zweite Leitungsabschnitt durch die Steckverbindung miteinander verbindbar sind. Bevorzugt durchsetzt zumindest eine Leitung zur Übertragung eines Mediums, von Energie und / oder Daten oder ein Leitungsabschnitt das Steckelement und die Aufnahme für das Steckelement, insbesondere das im Vorstehenden genannte, nicht am Außenumfang der Steckverbindungsfläche angeordnete Steckelement oder die entsprechende Aufnahme. Diese Ausgestaltung ist Platz sparend und garantiert eine korrekte und sichere Verbindung der Leitungsabschnitte.

Vorzugsweise weist die Kupplungsvorrichtung oder der Körper der Kupplungsvorrichtung einen elektromechanischen Wandler oder Generator zur Erzeugung elektrischer Energie auf, welcher mit einem der Kupplungsvorrichtung zuführbarem Fluid betreibbar ist. Vorzugsweise ist zumindest ein Teil des Generators in einer Bohrung der Kupplungsvorrichtung angeordnet. Vorzugsweise ist zumindest ein Teil des Generators, insbesondere das durch das Fluid in Bewegung versetzbare Laufrad, in einer Fluidleitung der Kupplungsvorrichtung aufgenommen. Vorzugsweise ist der elektromechanische Wandler nur in einem der beiden lösbar miteinander verbindbaren Abschnitte der Kupplungsvorrichtung angeordnet. Vorzugsweise ist der Generator mit elektrischen Kontakten an der Steckverbindung oder den Steckverbindungsflächen verbunden, so dass die von dem Generator erzeugte elektrische Energie über die Steckverbindung übertragbar ist. Vorzugsweise ist der Generator über elektrische Kontakte, zum Beispiel über die elektrischen Kontakte an der Steckverbindung oder den Steckverbindungsflächen und / oder über elektrische Kontakte an dem instrumentenseitigen Ende der Kupplungsvorrichtung, insbesondere an dem Kupplungszapfen, mit einem elektrischen Verbraucher in dem Instrument verbindbar. Vorzugsweise ist der Generator über elektrische Kontakte, zum Beispiel über die elektrischen Kontakte an der Steckverbindung oder den Steckverbindungsflächen, mit einem elektrischen Verbraucher in der Kupplungsvorrichtung verbindbar. Vorzugsweise ist der Generator über eine Fluidleitung oder zumindest einen Fluidleitungsabschnitt mit der Steckverbindung oder den Steckverbindungsflächen verbunden, so dass das den Generator antreibende Fluid über die Steckverbindung übertragbar ist. Vorzugsweise ist der Generator, zum Beispiel über eine Fluidleitung oder zumindest einen Fluidleitungsabschnitt, mit einer Öffnung an dem instrumentenseitigen Ende der Kupplungsvorrichtung, insbesondere an dem Kupplungszapfen, verbunden, so dass das den Generator antreibende Fluid auf das Instrument übertragbar oder von diesem empfangbar ist. Vorzugsweise ist der Generator durch eine Öffnung am versorgungsseitigen Ende in die Kupplungsvorrichtung einfügbar oder daraus entnehmbar. Vorzugsweise ist diese Öffnung durch ein Dichtelement abdichtbar.

Vorzugsweise umfasst die zumindest eine Leitung zur Übertragung eines Mediums, von Energie und / oder Daten einen elektrischen Leiter, der zumindest auf einem Teilabschnitt eine gedruckte, gestanzte oder geätzte Leiterbahn und / oder einen flexiblen Leiterbahnträger aufweist. Dies ermöglicht insbesondere in Abschnitten der Kupplungsvorrichtung mit vielen Leitern und Leitungen und / oder mit wenig Platz eine flexiblen Verlauf des elektrischen Leiters durch die Kupplungsvorrichtung und einfachen Einbau der elektrischen Leiter in die Kupplungsvorrichtung. Vorzugsweise ist die gedruckte, gestanzte oder geätzte Leiterbahn und / oder der flexible Leiterbahnträger an der Steckverbindung vorgesehen und / oder mit dem elektromechanischen Wandler verbunden. Vorzugsweise erstreckt sich die gedruckte, gestanzte oder geätzte Leiterbahn und / oder der flexible Leiterbahnträger durch einen der beiden lösbar miteinander verbindbaren Abschnitte der Kupplungsvorrichtung oder von der Steckverbindung oder einer Steckverbindungsfläche bis zum dem instrumentenseitigen Ende oder bis zu dem Kupplungszapfen oder bis zu dem versorgungsseitigen Ende der Kupplungsvorrichtung. Vorzugsweise sind auf der gedruckten, gestanzten oder geätzten Leiterbahn und / oder auf dem flexiblen Leiterbahnträger federnde elektrische Kontakte vorgesehen, insbesondere an dem der Steckverbindung zugewandten Ende der Leiterbahn und / oder des Leiterbahnträgers.

Vorzugsweise ist zumindest einer der beiden lösbar miteinander verbindbaren Abschnitte der Kupplungsvorrichtung aus Kunststoff hergestellt. Besonders bevorzugt sind beide lösbar miteinander verbindbaren Abschnitte der Kupplungsvorrichtung aus Kunststoff hergestellt. Durch die Herstellung aus Kunststoff sind insbesondere die elektrischen Leiter und / oder der Generator der Kupplungsvorrichtung in vorteilhafter Weise elektrisch isoliert und es verringern sich negative elektromagnetische Einflüsse auf den Generator. Die Herstellung aus Kunststoff erfolgt zum Beispiel durch mechanische Bearbeitung eines Rohlings aus Kunststoff oder durch ein Spritzgussverfahren.

Ein Verfahren zur Herstellung einer Kupplungsvorrichtung zur Verbindung eines medizinischen, insbesondere dentalen, Instruments mit einer Versorgungs-, Steuer- und / oder Regeleinheit, ist dadurch definiert, dass eine Kupplungsvorrichtung mit zwei lösbar miteinander verbindbaren Abschnitten zur Verfügung gestellt wird, wobei an dem ersten Abschnitt das instrumentenseitige Ende und an dem zweiten Abschnitt das versorgungsseitige Ende vorgesehen ist, und die beiden lösbar miteinander verbindbaren Abschnitte miteinander verbunden werden, vorzugsweise über eine Steckverbindung. Vorzugsweise werden durch das Verbinden der Steckverbindung ein erster Leitungsabschnitt im ersten Abschnitt der Kupplungsvorrichtung und ein zweiter Leitungsabschnitt im zweiten Abschnitt der Kupplungsvorrichtung miteinander verbunden. Vorzugsweise wird durch das Verbinden der Steckverbindung ein in der Kupplungsvorrichtung vorgesehener elektromechanischer Wandler mit einem elektrischen Leiter und / oder mit einer Fluidleitung der Kupplungsvorrichtung verbunden. Vorzugsweise wird der Kupplungszapfen mit einer instrumentenseitigen, freien, metallischen Endfläche oder mit einer von einer instrumentenseitigen, freien Endfläche des Kupplungszapfens abstehenden Rohrleitung mit einer instrumentenseitigen, freien, metallischen Kontaktfläche versehen. Vorzugsweise wird an der versorgungsseitigen, freien Endfläche der Verbindungsvorrichtung am versorgungsseitigen Ende der Kupplungsvorrichtung zumindest ein integral mit der Kupplungsvorrichtung ausgebildetes Rohr zur Übertragung eines Mediums und / oder zumindest eine Öffnung geformt, in welche insbesondere eine Leitung zur Übertragung eines Mediums, von Energie und / oder Daten eingefügt wird, wobei vorzugsweise zumindest ein Teil der einfügbaren Leitung von der Endfläche absteht. Vorzugsweise wird eine Außenhülse aus Metall an dem Körper oder Körpermitteilteil der Kupplungsvorrichtung befestigt.

Die Erfindung wird nachfolgend anhand bevorzugter Ausführungsbeispiele und Bezug nehmend auf die beigefügten Zeichnungen erläutert. Es zeigt die
Figur 1 ein erstes Ausführungsbeispiel einer Kupplungsvorrichtung zur Verbindung eines medizinischen, insbesondere dentalen, Instruments mit einer Versorgungs-, Steuer- und / oder Regeleinheit mit einem Körper, der zwei lösbar miteinander verbindbare Abschnitte aufweist und mit einer von dem Körper gelösten Außenhülse.
Figur 2 zeigt den ersten der beiden lösbaren Abschnitte der Kupplungsvorrichtung der Figur 1, jedoch in etwa um 180° um die Längsachse der Kupplungsvorrichtung gedreht.
Figur 3A ein zweites Ausführungsbeispiel einer Kupplungsvorrichtung zur Verbindung eines medizinischen, insbesondere dentalen, Instruments mit einer Versorgungs-, Steuer- und / oder Regeleinheit, wobei die zwei Abschnitte des Körpers voneinander getrennt sind.
Figur 3B das versorgungsseitige Ende der Kupplungsvorrichtung gemäß Figur 3A.
Figur 4A die Kupplungsvorrichtung der Figur 1, wobei die zwei Abschnitte des Körpers voneinander getrennt sind.
Figur 4B das versorgungsseitige Ende der Kupplungsvorrichtung gemäß Figur 4A.

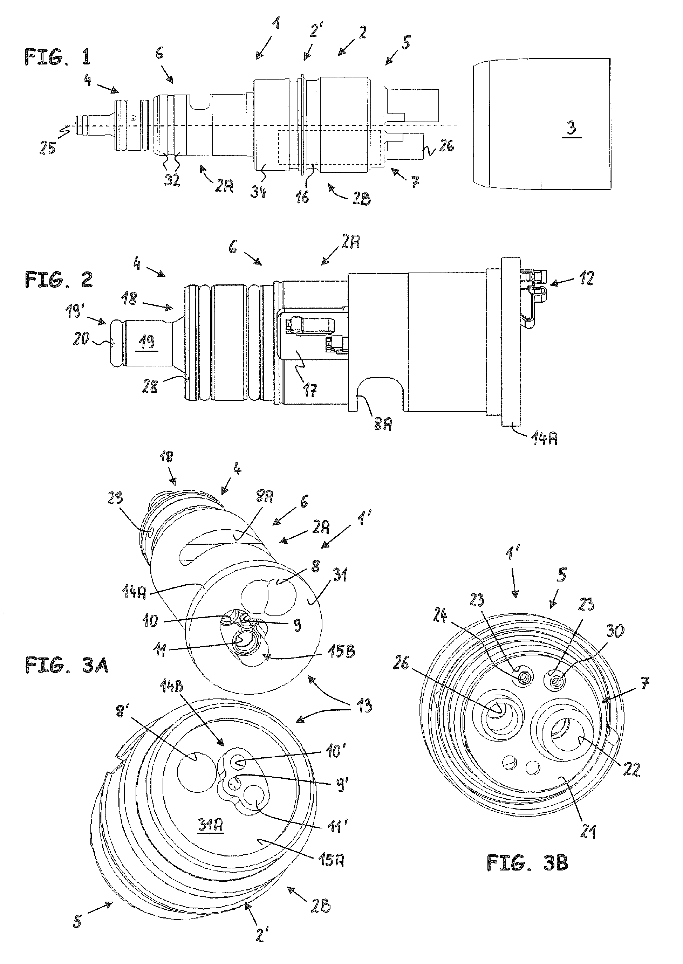

Die in den Figuren 1 - 4B dargestellten Kupplungsvorrichtungen 1, 1' zur Verbindung eines medizinischen, insbesondere dentalen, Instruments (insbesondere eines Hand- oder Winkelstücks) mit einer Versorgungs-, Steuer- und / oder Regeleinheit, weisen einen Körper 2 und eine an dem Körper 2 befestigbare Außenhülse 3 (siehe Figur 1) auf. Der Körper 2 umfasst ein instrumentenseitiges Ende 4, ein versorgungsseitiges Ende 5 und einen die beiden Enden 4, 5 verbindenden Körpermittelteil 2'. Die Außenhülse 3 ist über ein Befestigungsmittel 34, zum Beispiel ein Gewinde, am Körper 2 oder am Körpermittelteil 2' lösbar befestigbar. Am instrumentenseitigen Ende 4 ist ein Kupplungszapfen 6 zur lösbaren Verbindung mit dem medizinischen, insbesondere dentalen, Instrument und am versorgungsseitigen Ende 5 eine Verbindungsvorrichtung 7 zur lösbaren Verbindung mit der Versorgungs-, Steuer- und / oder Regeleinheit vorgesehen. Die Kupplungsvorrichtungen 1, 1' haben eine gerade Längsachse 25, entlang der sich die Kupplungsvorrichtungen 1, 1', insbesondere deren Körper 2, erstrecken. Entsprechend sind die Kupplungsvorrichtungen 1, 1' gerade ausgebildet. Die Kupplungsvorrichtungen können jedoch auch gebogen oder gewinkelt geformt sein.

Der Körper 2 der Kupplungsvorrichtungen 1, 1' weist zwei lösbar miteinander verbindbare Abschnitte 2A, 2B auf, wobei an dem ersten Abschnitt 2A das instrumentenseitige Ende 4 und an dem zweiten Abschnitt 2B das versorgungsseitige Ende 5 vorgesehen ist. Der erste und der zweite Abschnitt 2A, 2B der Kupplungsvorrichtungen 1, 1' sind mittels einer Steckverbindung 13 miteinander verbindbar. Die Steckverbindung 13 weist an dem ersten Abschnitt 2A ein Steckelement 14A und an dem zweiten Abschnitt 2B ein Steckelement 14B auf. Die Steckverbindung 13 umfasst des Weiteren an dem ersten Abschnitt 2A eine Aufnahme 15B für Steckelement 14B und an dem zweiten Abschnitt 2B eine Aufnahme 15A für das Steckelement 14A auf. Das Steckelement 14A ist als Ringflansch am Ende und / oder Außenumfang des ersten Abschnitts 2A ausgebildet. Das Steckelement 14B ist als Formelement ausgebildet, das von dem zweiten Abschnitt 2B oder von einer Steckverbindungsfläche 31A absteht. Das Steckelement 14B ist von zumindest einer Leitung 9', 10', 11' zur Übertragung eines Mediums, von Energie und / oder Daten durchsetzt. Die Aufnahme 15A ist als Rücksprung an einem Ende des zweiten Abschnitts 2B oder durch die Steckverbindungsfläche 31A an einem Ende des zweiten Abschnitts 2B und einen die Steckverbindungsfläche 31A umgebenden Ringflansch gebildet. In oder anschließend an die Aufnahme 15A oder an der Steckverbindungsfläche 31A ist zumindest eine Leitung 8', 12' zur Übertragung eines Mediums, von Energie und / oder Daten und / oder eine elektrischer Kontakt vorgesehen. Die Aufnahme 15B ist als Rücksprung oder Bohrung an einem Ende des ersten Abschnitts 2A oder in der Steckverbindungsfläche 31 gebildet. In oder anschließend an die Aufnahme 15B ist zumindest einer Leitung 9, 10, 11 zur Übertragung eines Mediums, von Energie und / oder Daten vorgesehen. Vorzugsweise ist ein Steckelement 14B in einer Aufnahme 15A und / oder eine Aufnahme 15B in oder an einem Steckelement 14A oder ein Steckelement 14B und / oder eine Aufnahme 15B in oder an einer Steckverbindungsfläche 31, 31A vorgesehen.

Vorzugsweise ist an der Steckverbindung 13, insbesondere an dem Steckelement 14B und / oder an der Aufnahme 15B und / oder an zumindest einer der dort vorgesehenen Leitungen 9, 9', 10, 10', 11, 11' zumindest ein Dichtelement zum Abdichten der Leitung 9, 9', 10, 10', 11, 11' vorgesehen.

Neben der Verbindung eines Instruments mit einer Versorgungs-, Steuer- und / oder Regeleinheit sind die Kupplungsvorrichtungen 1, 1' ausgebildet, ein Medium, Energie und / oder Daten durch die Kupplungsvorrichtung 1, 1' zu übertragen, insbesondere von der Versorgungs-, Steuer- und / oder Regeleinheit zu dem Instrument und / oder in die entgegengesetzte Richtung. Dazu ist an den Kupplungsvorrichtungen 1, 1' zumindest eine Leitung 8, 8', 9, 9', 10, 10', 11, 11', 12, 12' zur Übertragung eines Mediums, von Energie und / oder Daten vorgesehen, die das instrumentenseitige Ende 4 und das versorgungsseitige Ende 5 verbindet oder sich zumindest durch einen Abschnitt 2A, 2B und / oder die Steckverbindung 13 erstreckt. Die durch die Leitung 8, 8' - 12, 12' übertragbaren Medien umfassen zum Beispiel ein Fluid, ein Gas, eine Flüssigkeit, Wasser oder Druckluft, elektromagnetische Strahlung, Licht, etc. Die durch die Leitung 8, 8' - 12, 12' übertragbare Energie umfasst zum Beispiel elektrische Energie oder Antriebsenergie für einen Antrieb des Instruments, zum Beispiel Druckluft. Die durch die Leitung 8, 8' - 12, 12' übertragbaren Daten umfassen zum Beispiel elektrische oder optische Signale, insbesondere Betriebsdaten für den Betrieb des Instruments, Messdaten eines Sensors des Instruments, Steuer- oder Regelsignale, etc. In Abhängigkeit des zu übertragenden Mediums ist die zumindest eine Leitung unterschiedlich ausgebildet: Die Leitungen 8, 8' - 11, 11' zur Übertragung eines Mediums umfassen zum Beispiel eine Rohrleitung, eine Bohrung, einen Kanal, eine Nut oder ähnliches. Die Leitungen 12, 12' zur Übertragung von Energie und / oder Daten umfassen zum Beispiel einen elektrischen Leiter oder einen optischen Leiter.

Gemäß den Ausführungsbeispielen der Figuren 1 - 5 übertragen die Leitungen folgende Medien: Die Leitung 8, 8' ist über die Ausnehmung 8A am ersten Abschnitt 2A oder am Kupplungszapfen 6 mit dem Instrument verbunden und leitet das Antriebsgas, insbesondere die Druckluft, die den Antrieb des Instruments passiert hat, in Richtung der Versorgungs-, Steuer- und / oder Regeleinheit. Die Leitungsabschnitte 8, 8' sind an der oder durch die Steckverbindung 13 miteinander verbunden. Die Leitung 8, 8' ist mit dem Rohr 22 am versorgungsseitigen Ende 5 oder an der Verbindungsvorrichtung 7 verbunden. Das Rohr 22 ist integral mit der Kupplungsvorrichtung 1, 1' oder dem Abschnitt 2B ausgebildet und ragt insbesondere über die freie Endfläche 21 der Verbindungsvorrichtung 7.

Die Leitung 9, 9', 19 leitet eine Flüssigkeit, insbesondere Wasser, zu dem Instrument, von welchem es, zum Beispiel zum Kühlen oder Spülen, auf eine Behandlungsstelle abgebbar ist. Die Leitung 9, 9', 19 ist über eine Öffnung 20 an der freien Endfläche 18 oder Kontaktfläche 19' des ersten Abschnitts 2A oder des Kupplungszapfens 6 mit dem Instrument verbunden. Insbesondere der Leitungsabschnitt 19 ragt als Rohrleitung von der freien Endfläche 18 des Kupplungszapfens 6 in Richtung des Instruments. Die Kontaktfläche 19' ist insbesondere als metallische Kontaktfläche ausgebildet. Die Leitungsabschnitte 9, 9' sind an der oder durch die Steckverbindung 13 miteinander verbunden. Die Leitungsabschnitte 9, 9' durchsetzen insbesondere das Steckelement 14B und die Aufnahme 15B für das Steckelement 14B. Die Leitung 9, 9', 19 ist mit dem Rohr 24 am versorgungsseitigen Ende 5 oder an der Verbindungsvorrichtung 7 verbunden. Das Rohr 24 ist insbesondere ein metallisches Rohr, das in eine Bohrung oder Öffnung 23 der Kupplungsvorrichtung 1, 1' einfügbar ist. Das Rohr 24 ragt insbesondere über die freie Endfläche 21 der Verbindungsvorrichtung 7.

Die Leitung 10, 10' leitet ein Gas, insbesondere Druckluft, zu dem Instrument, von welchem es, zum Beispiel zum Kühlen oder Spülen, auf eine Behandlungsstelle abgebbar ist. Die Leitung 10, 10' ist über eine Öffnung 29 an dem ersten Abschnitt 2A oder an dem Kupplungszapfen 6 mit dem Instrument verbunden. Die Leitungsabschnitte 10, 10' sind an der oder durch die Steckverbindung 13 miteinander verbunden. Die Leitungsabschnitte 10, 10' durchsetzen insbesondere das Steckelement 14B und die Aufnahme 15B für das Steckelement 14B. Die Leitung 10, 10' ist mit dem Rohr 30 am versorgungsseitigen Ende 5 oder an der Verbindungsvorrichtung 7 verbunden. Das Rohr 30 ist insbesondere ein metallisches Rohr, das in eine Bohrung oder Öffnung 23 der Kupplungsvorrichtung 1, 1' einfügbar ist. Das Rohr 30 ragt insbesondere über die freie Endfläche 21 der Verbindungsvorrichtung 7.

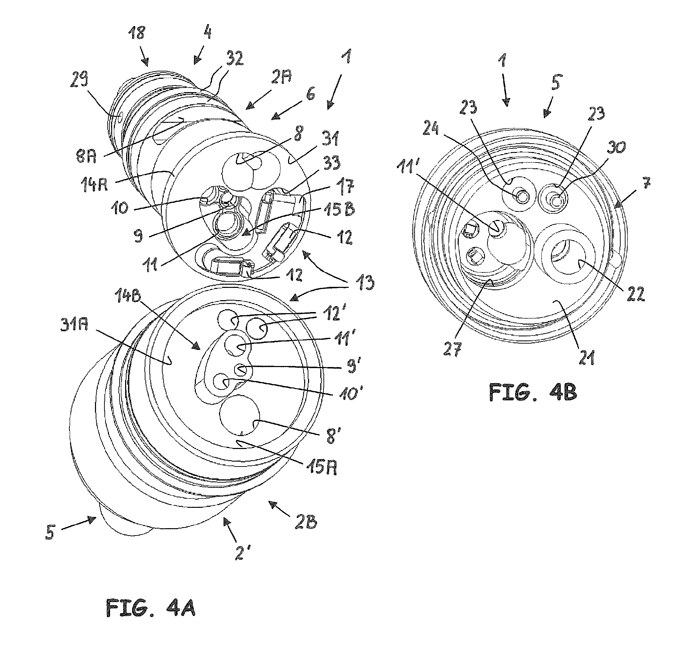

Die Leitung 11, 11' ist über eine Öffnung 28 an der freien Endfläche 18 des ersten Abschnitts 2A oder des Kupplungszapfens 6 mit dem Instrument verbunden und leitet das Antriebsgas, insbesondere die Druckluft, zu dem Antrieb des Instruments, zum Beispiel zu einem Laufrad oder einer Turbine. Die Leitungsabschnitte 11, 11' sind an der oder durch die Steckverbindung 13 miteinander verbunden. Die Leitungsabschnitte 11, 11' durchsetzen insbesondere das Steckelement 14B und die Aufnahme 15B für das Steckelement 14B. Die Leitung 11, 11' ist mit dem Rohr 26 am versorgungsseitigen Ende 5 oder an der Verbindungsvorrichtung 7 verbunden (siehe Figur 1 und 3B). Das Rohr 26 ragt insbesondere über die freie Endfläche 21 der Verbindungsvorrichtung 7. Bei dem Ausführungsbeispiel gemäß den Figuren 1, 4A, 4B weist der Leitungsabschnitt 11' in dem zweiten Abschnitt 2B zumindest über einen gewissen Längsabschnitt einen größeren Durchmesser auf oder bildet eine Aufnahme 27, in der zumindest ein Teil eines elektromechanischen Wandlers 16 aufnehmbar ist. Demgemäß ist die Leitung 11, 11', 27 auch dazu ausgebildet, den elektromechanischen Wandler 16 mit einem Antriebsfluid, insbesondere Druckluft, zu versorgen. Vorzugsweise ist das Rohr 26 mit dem elektromechanischen Wandler 16 verbunden oder an diesem befestigt.

Die Leitung 12, 12' ist als elektrischer Leiter zur Übertragung von elektrischer Energie und / oder von elektrischen Signalen ausgebildet (siehe Figuren 4A, 4B). Sie verbindet eine elektrische Energiequelle oder einen Signalgenerator oder einen Signalempfänger mit dem Instrument. Als Energiequelle ist zum Beispiel ein elektromechanischer Wandler 16 in der Kupplungsvorrichtung 1 vorgesehen. Alternativ ist eine elektrische Energiequelle außerhalb der Kupplungsvorrichtungen 1, 1' möglich. Die Leitungsabschnitte 12, 12' sind an der oder durch die Steckverbindung 13 miteinander verbunden. Die Leitungsabschnitte 12, 12' durchsetzen insbesondere die Aufnahme 15A für das Steckelement 14A und / oder die Steckverbindungsfläche 31, 31A. Die Leitungsabschnitte 12, 12' weisen an der Steckverbindung 13 elektrische Kontakte auf, zum Beispiel Flächenkontakte (insbesondere am zweiten Abschnitt 2B, siehe Figur 4A) oder Federkontakte (insbesondere am ersten Abschnitt 2A, siehe Figur 2 und 4A). Die Leitung 12, 12' ist über elektrische Kontakte 32 an dem ersten Abschnitt 2A oder an dem Kupplungszapfen 6 mit dem Instrument verbunden. Die Kontakte 32 sind insbesondere als den Kupplungszapfen 6 an seiner Außenseite umgebende, ringförmige Metallbänder, die zum Beispiel Teil eines Schleifkontakts sind, ausgebildet. Vorzugsweise weist der elektrische Leiter 12, 12' eine gedruckte, gestanzte oder geätzte Leiterbahn und / oder einen flexiblen Leiterbahnträger 17 auf. Die gedruckte, gestanzte oder geätzte Leiterbahn und / oder der flexible Leiterbahnträger 17 sind in einer Bohrung 33 der Kupplungsvorrichtung 1 angeordnet. Die gedruckte, gestanzte oder geätzte Leiterbahn und / oder der flexible Leiterbahnträger 17 sind bevorzugt zumindest an einem Teil der Steckverbindung 13 und / oder an dem ersten Abschnitt 2A und / oder an dem Kupplungszapfen 6 angeordnet und / oder sie kontaktieren die elektrischen Kontakte 32 (siehe auch die Figur 1, in welcher die elektrischen Kontakte 32 dargestellt sind, und die Figur 2, in welcher die Kontakte 32 weggelassen sind, um die / den darunter angeordnete(n) gedruckte, gestanzte oder geätzte Leiterbahn und / oder flexiblen Leiterbahnträger 17 mit den darauf vorgesehenen elektrischen Kontakten zu zeigen). Bevorzugt ist eine Abschnitt der gedruckten, gestanzten oder geätzten Leiterbahn und / oder des flexiblen Leiterbahnträgers 17 an oder über der Steckverbindungsfläche 31 oder in die Aufnahme 15A der Steckverbindung 13 ragend angeordnet. Bevorzugt sind die gedruckte, gestanzte oder geätzte Leiterbahn und / oder die flexible Leiterbahnträger 17 an der oder über die Steckverbindung 13 austauschbar.

Die beiden lösbar miteinander verbindbaren Abschnitte 2A, 2B der Kupplungsvorrichtungen 1, 1' sind aus Kunststoff und die Außenhülse 3 ist aus Metall hergestellt.

Die Erfindung ist nicht auf die beschriebenen Ausführungsbeispiele beschränkt, sondern umfasst alle Ausführungen, die das prinzipielle, sinngemäße Funktionsprinzip der Erfindung anwenden oder beinhalten. Des Weiteren sind alle Merkmale aller beschriebenen und dargestellten Ausführungsbeispiele miteinander kombinierbar.

## Patentansprüche

1. Kupplungsvorrichtung (1, 1') zur Verbindung eines medizinischen, insbesondere dentalen, Instruments mit einer Versorgungs-, Steuer- und / oder Regeleinheit, die einen Körper (2) und eine an dem Körper (2) befestigbare Außenhülse (3) aufweist, wobei der Körper (2) umfasst: Ein instrumentenseitiges Ende (4) und ein versorgungsseitiges Ende (5), wobei am instrumentenseitigen Ende (4) ein Kupplungszapfen (6) zur lösbaren Verbindung mit dem medizinischen, insbesondere dentalen, Instrument und am versorgungsseitigen Ende (5) eine Verbindungsvorrichtung (7) zur lösbaren Verbindung mit der Versorgungs-, Steuer- und / oder Regeleinheit vorgesehen ist, und zumindest eine Leitung (8, 8' - 12, 12') zur Übertragung eines Mediums, von Energie und / oder Daten, die sich durch die Kupplungsvorrichtung (1, 1') erstreckt, so dass ein Medium, Energie und / oder Daten durch die Kupplungsvorrichtung (1, 1') übertragbar ist / sind, **dadurch gekennzeichnet, dass**
der Körper (2) der Kupplungsvorrichtung (1, 1') zwei lösbar miteinander verbindbare Abschnitte (2A, 2B) aufweist, wobei an dem ersten Abschnitt (2A) das instrumentenseitige Ende (4) und an dem zweiten Abschnitt (2B) das versorgungsseitige Ende (5) vorgesehen ist.

2. Kupplungsvorrichtung (1, 1') nach Anspruch 1, **dadurch gekennzeichnet, dass** der erste und der zweite Abschnitt (2A, 2B) mittels einer Steckverbindung (13) miteinander verbindbar sind, welche an einem des ersten oder zweiten Abschnitts (2A, 2B) ein Steckelement (14A, 14B) und an dem anderen des ersten oder zweiten Abschnitts (2A, 2B) eine Aufnahme (15A, 15B) für das Steckelement (14A, 14B) aufweist.

3. Kupplungsvorrichtung (1, 1') nach Anspruch 2, **dadurch gekennzeichnet, dass** das Steckelement durch einen Ringflansch (14A) gebildet ist, der in die Aufnahme (15A) für das Steckelement (14A) einsteckbar ist.

4. Kupplungsvorrichtung (1, 1') nach Anspruch 2 oder 3, **dadurch gekennzeichnet, dass** zumindest eine Leitung (8, 8' - 12, 12') zur Übertragung eines Mediums, von Energie und / oder Daten einen ersten Leitungsabschnitt (8 - 12), der in dem ersten Abschnitt (2A) der Kupplungsvorrichtung (1, 1') vorgesehen ist, und einen zweiten Leitungsabschnitt (8' - 12'), der in dem zweiten Abschnitt (2B) der Kupplungsvorrichtung (1, 1') vorgesehen ist, aufweist, wobei der erste Leitungsabschnitt (8 - 12) und der zweite Leitungsabschnitt (8' - 12') durch die Steckverbindung (13) miteinander verbindbar sind.

5. Kupplungsvorrichtung (1, 1') nach einem der Ansprüche 2 - 4, **dadurch gekennzeichnet, dass**
zumindest eine Leitung (8, 8' - 12, 12') zur Übertragung eines Mediums, von Energie und / oder Daten das Steckelement (14A, 14B) und die Aufnahme (15A, 15B) für das Steckelement (14A, 14B) durchsetzt.

6. Kupplungsvorrichtung (1, 1') nach einem der vorstehenden Ansprüche, **dadurch gekennzeichnet, dass**
die Kupplungsvorrichtung (1, 1') einen elektromechanischen Wandler (16) zur Erzeugung elektrischer Energie aufweist, welcher mit einem der Kupplungsvorrichtung (1, 1') zuführbarem Fluid betreibbar ist.

7. Kupplungsvorrichtung (1, 1') nach einem der vorstehenden Ansprüche, **dadurch gekennzeichnet, dass**
die zumindest eine Leitung (8, 8' - 12, 12') zur Übertragung eines Mediums, von Energie und / oder Daten eine Rohrleitung oder Bohrung (8, 8' - 10, 10') zur Leitung eines Fluids oder einen elektrischen Leiter (12, 12') oder einen optischen Leiter aufweist.

8. Kupplungsvorrichtung (1, 1') nach Anspruch 7, **dadurch gekennzeichnet, dass**
der elektrische Leiter (12, 12') eine, insbesondere an der Steckverbindung (13) vorgesehene, gedruckte, gestanzte oder geätzte Leiterbahn und / oder einen, insbesondere an der Steckverbindung vorgesehenen, flexiblen Leiterbahnträger (17) aufweist.

9. Kupplungsvorrichtung (1, 1') nach einem der vorstehenden Ansprüche, **dadurch gekennzeichnet, dass**
der erste Abschnitt (2A) der Kupplungsvorrichtung (1, 1') im Wesentlichen durch den Kupplungszapfen (6) gebildet ist.

10. Kupplungsvorrichtung (1, 1') nach einem der vorstehenden Ansprüche, **dadurch gekennzeichnet, dass**
der Kupplungszapfen (6) eine instrumentenseitige, freie, metallische Endfläche aufweist oder dass von einer instrumentenseitigen, freien Endfläche (18) des Kupplungszapfens (6) eine Rohrleitung (19) mit einer instrumentenseitigen, freien, metallischen Kontaktfläche (19') absteht.

11. Kupplungsvorrichtung (1, 1') nach einem der vorstehenden Ansprüche, **dadurch gekennzeichnet, dass**
der Kupplungszapfen (6) eine instrumentenseitige, freie Endfläche (18, 19') aufweist, an welcher mittig eine Öffnung (20) vorgesehen ist, die mit einer Rohrleitung (9, 9', 19) zur Leitung eines Fluids der Kupplungsvorrichtung (1, 1') verbunden und / oder mit einer Rohrleitung zur Leitung eines Fluids des Instruments verbindbar ist.

12. Kupplungsvorrichtung (1, 1') nach einem der vorstehenden Ansprüche, **dadurch gekennzeichnet, dass**
die Verbindungsvorrichtung (7) am versorgungsseitigen Ende (5) der Kupplungsvorrichtung (1, 1') eine versorgungsseitige, freie Endfläche (21) aufweist, von welcher zumindest ein integral mit der Kupplungsvorrichtung (1, 1') ausgebildetes Rohr (22) zur Übertragung eines Mediums absteht und / oder an der zumindest eine Öffnung (23) vorgesehen ist, in welche eine Leitung (24, 30) zur Übertragung eines Mediums, von Energie und / oder Daten einfügbar ist, wobei vorzugsweise zumindest ein Teil der einfügbaren Leitung (24, 30) von der Endfläche (21) absteht.

13. Kupplungsvorrichtung (1, 1') nach einem der vorstehenden Ansprüche, **dadurch gekennzeichnet, dass**
zumindest einer der beiden lösbar miteinander verbindbaren Abschnitte (2A, 2B) der Kupplungsvorrichtung (1, 1') aus Kunststoff hergestellt ist.

14. Kupplungsvorrichtung (1, 1') nach einem der vorstehenden Ansprüche, **dadurch gekennzeichnet, dass**
die Außenhülse (3) aus Metall hergestellt ist.

15. Verfahren zur Herstellung einer Kupplungsvorrichtung (1, 1') zur Verbindung eines medizinischen, insbesondere dentalen, Instruments mit einer Versorgungs-, Steuer- und / oder Regeleinheit, **gekennzeichnet, durch**
zur Verfügung stellen einer Kupplungsvorrichtung (1, 1') mit einem Körper (2) mit zwei lösbar miteinander verbindbaren Abschnitten (2A, 2B) nach einem der vorstehenden Ansprüche, wobei an dem ersten Abschnitt (2A) das instrumentenseitige Ende (4) und an dem zweiten Abschnitt (2B) das versorgungsseitige Ende (5) vorgesehen ist, und Verbinden der beiden lösbar miteinander verbindbaren Abschnitte (2A, 2B).
